Europäisches Patentamt

European Patent Office

Office européen des brevets

(11) Publication number : **0 671 715 A1**

# (12) EUROPEAN PATENT APPLICATION

(21) Application number : **95301407.3**

(22) Date of filing : **03.03.95**

(51) Int. Cl.⁶ : **G08B 13/183,** G01S 17/02

(30) Priority : **10.03.94 IL 10892594**

(43) Date of publication of application :
**13.09.95 Bulletin 95/37**

(84) Designated Contracting States :
**DE FR GB**

(71) Applicant : **State of Israel Ministry of Defence Raphael Armament Development Authority P.O. Box 2250 Haifa (IL)**

(72) Inventor : **Saban, Izhak**
**73A Harishonim Street**
**Kyriat Haim, Haifa 26302 (IL)**

(74) Representative : **Beresford, Keith Denis Lewis et al**
**BERESFORD & Co.**
**2-5 Warwick Court**
**High Holborn**
**London WC1R 5DJ (GB)**

(54) **Perimeter securing apparatus.**

(57)   A perimeter securing apparatus comprises : a) one or more unit, each unit comprising laser light generating means and laser light receiving means ; and b) signal receiving and analyzing means, to receive the signal generated by the said laser light receiving means and to determine any deviation of the said signal from a predetermined value.

Fig. 1

The present invention relates to perimeter securing means. More particularly, the invention relates to an apparatus for alerting of an unauthorized entry into a given perimeter, which uses laser emission.

It is a well known problem, when securing a given area, to be able to distinguish between authorized and unauthorized persons crossing the border of such area. Normally, the area to be secured, e.g., a house or a plant, is provided with electronic fencing means which run along its perimeter, and the fencing means are equipped with means capable of generating an alarm signal which indicates when the perimeter which they secure has been crossed. It is then assumed that when the perimeter is crossed at a point other than an authorized gate, the person which crosses it is an intruder, and appropriate measures, e.g., sounding an alarm, are taken.

The prior art has made use of laser emission in a limited way. For instance, US 5,063,288 deals with an apparatus for securing a confined space with a laser emission, by generating laser vertical securing planes from a laser beam and reflecting them into a formation confining a plane.

Shielding or interruption of a laser vertical securing plane by an intruder generates an alarm signal.

US 3,623,057 discloses a laser perimeter intrusion detection system, in which laser beams are generated which define the perimeter of the area to be protected. When a beam is interrupted by an intruder an alarm is generated. The system described in this reference requires the use of a central laser beam generator, as well as mirrors and beam amplifying means along the fence.

All the prior art systems present severe drawbacks, inasmuch as they require expensive elements, and must be fixedly installed and their configuration cannot be easily changed. Additionally, the art has so far failed to provide a laser fence which can conveniently be used to discriminate between authorized and unauthorized crossing of the perimeter.

It is an object of the present invention to provide perimeter securing means utilizing laser signals, which at least alleviates the drawbacks of the prior art and which are simple to install and reliable to use.

It is another object of the invention to provide personal perimeter securing means, which can be used to secure small perimeters, such as that of a car or a sentry.

It is still another object of the invention to provide perimeter securing means which can be made to discriminate between authorized and unauthorized crossings.

Other objects of the invention will become apparent as the description proceeds.

The perimeter securing apparatus according to the invention comprises:

a. one or more unit, each unit comprising:
- laser light generating means;
- laser light receiving means; and
b. signal receiving and analyzing means, to receive the signal generated by the said laser light receiving means and to determine any deviation of the said signal from a predetermined value.

In a preferred embodiment of the invention the apparatus of the invention comprises:

a. one or more unit, each unit comprising:
- laser light generating means;
- laser light receiving means;
b. signal encoding means capable of encoding a signal on the said transmitted laser light; and
c. signal receiving and analyzing means, to receive the signal generated by the said laser light receiving means and to determine any deviation of the said signal from a predetermined value.

A preferred embodiment of the invention comprises a laser fence comprising a plurality of poles, each pole being provided with at least one receiving/transmitting laser diode, each pole being provided with signal modulating means to modulate the laser light transmitted thereby to encode a predetermined message. Preferably (but not limitatively) the predetermined message is a code identifying the transmitting pole.

According to a specific preferred embodiment of the invention, each pole also comprises signal receiving means to receive a signal from an outside source.

In one preferred embodiment of the invention the laser fence comprises, in combination:
- a plurality of poles, each pole being provided with at least one receiving/transmitting laser diode, each pole being provided with signal modulating means to modulate the laser light transmitted thereby to encode a predetermined message;
- a base station to receive the laser light encoding the signal(s) transmitted from one pole to the neighboring one.

According to one embodiment of the invention the signal is transmitted by laser light, from each pole to the neighboring one, in one direction, until it reaches the base station.

According to another embodiment of the invention the signal is transmitted by laser light, from each pole to the two neighboring ones, in two directions, until it reaches the base station. Alternatively, of course, the direction of the light transmission can be changed at will, e.g., when one pole becomes inoperative for any reason. This can be effected, e.g., by an order contained in the signal generated by the base station or by the pole coupled to it.

Basically, there are a number of possible transmission/reception modes. In one embodiment of the invention, each pole is provided with one transmitter and one receiver. The receiver receives the transmission generated from the neighbouring pole on one side, and the transmitter generates a transmission which is received by the other neighbouring pole. In this way, a unidirectional transmission is effected.

In a variant of this embodiment of the invention, the poles are provided with reflecting material and the receiver of each pole does not receive the optical signal generated by a neighbouring pole, but rather the transmission generated by its own transmitter, which has been reflected by the reflecting material positioned on the neighbouring pole. Interruption of the reflected transmission by an unauthorized entry will result in a discontinuity in the reception of the signal, and will thus be detected.

In another embodiment of the invention, a bi-directional transmission is effected. Thus, the receiving and the transmitting means of each pole are adapted to receive a signal from each neighbouring pole, and to transmit a signal to it. In this mode, each of two neighbouring poles will be alerted of an unauthorized entry by a change in the received signal, which change generates a signal which can be transitted to the base station, or to another location, either directly (e.g., byt RF transmission), or via a pole-to-pole transmission.

According to a preferred embodiment of the invention, the signal encoded by the laser light transmitted by each pole to the neighboring one(s) includes one or more of the following data:

- pole identification code;
- "normal" or "disturbed" identification code;
- authorized entrance identification.

Each pole may transmit to the neighboring one only a signal relating to the segment which it sees or, according to a preferred embodiment of the invention, the signal transmitted by each consecutive pole is the sum of all the information generated by preceding poles and of the information generated by the transmitting pole. This "sum" is not necessarily a summation of the information, but can be, for instance, a new signal that has been generated by the pole which has first decodified the received signal, has added to it additional information, and has codifiet the updated information and transmitted it.

In another aspect, the invention is directed to a personal perimeter securing apparatus, comprising a transparent housing containing an assembly mounted on a rotating motor, the said assembly comprising at least one receiving/transmitting laser diode, and a control and identification unit to receive the signals generated by the reflected laser light received by the receiving diode and to compare the picture generated thereby with the picture generated by the previous rotation of the assembly, and to generate an alarm signal if the two compared pictures differ by a predetermined amount.

This apparatus can be mounted on any desired small location, e.g., on the roof of a vehicle or on the roof of a building.

All the above and other characteristics and advantages of the invention will be better understood through the following illustrative and non-limitative description of preferred embodiments thereof, with reference to the drawings in which:

Fig. 1 illustrates a laser fence according to one preferred embodiment of the invention;

Fig. 2 schematically illustrates the optical and electronic construction of a pole, according to one preferred embodiment of the invention;

Fig. 3 shows the information block transmitted between poles, according to one embodiment of the invention.

Fig. 4 shows a recognition unit to be used in conjunction with one embodiment of the fence of Fig. 1;

Fig. 5 schematically shows the elements of a pole, according to one embodiment of the invention;

Fig. 6 is a cross-section of the pole of Fig. 5, taken along the AA plane;

Fig. 7 illustrates a personal perimeter securing unit, according to one embodiment of the invention;and

Fig. 8 illustrates the pictures comparison process, according to one embodiment of the invention, as effected by the personal perimeter securing unit of Fig. 7.

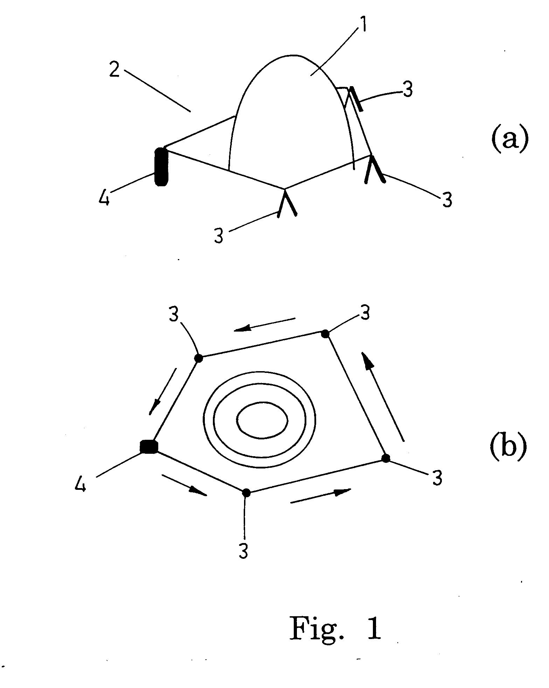

Looking now at Fig. 1(a), an object, which can be, e.g., a hill 1, is shown, around which a fence, generally indicated by numeral 2, is provided. The fence is constituted by a plurality of poles 3, one of which functions as - or is replaced by - a base station, 4. Each pole comprises a transmitting and receiving diode and a power supply, which may be a connector to be connected to a power line, or a battery.

The fence operates as follows. Each pole transmits a laser signal to its neighboring pole, in a chose direction or in both directions, and the neighboring pole receives and analyzes the received signal to determine whether it is a "normal" or a "disturbed" signal. Interruption of the laser beam, no matter how brief, generates a "disturbed" signal.

This is achieved by modulating the laser beam transmitted by one pole to its neighboring one. Modulation of the laser beam permits to encode information in the beam, such as the pole number. Accordingly, when a disturbance identifying an unauthorized crossing of the perimeter is generated, the beam transmits to the next ones also the identifying number of the poles between which the disturbance has occurred, and thus permits to identify the exact location of the unauthorized entrance.

As will be apparent to the skilled person, the fence is constructed of single poles, and all that is required is that neighboring poles be found in sight of each other. Accordingly, it is possible to secure perimeters around high objects, such as buildings and hills, since no line of sight is required between all the poles and the base station. Additionally, because any number of poles can be used, difficult areas having changing levels and obstacles can be easily secured. Of course, no delicate and expensive elements, such as mirrors, are required, nor are amplifying means required, since each pole generates a new signal.

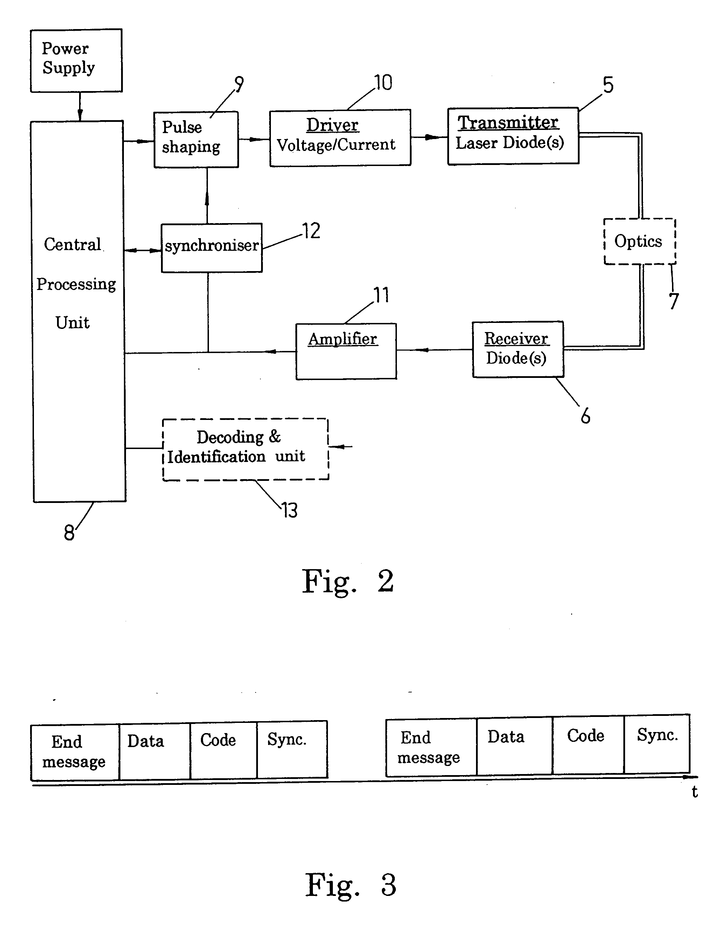

The optical and electronic construction of a typical pole, according to one preferred embodiment of the invention, is schematically shown in Fig. 2. It comprises a laser diode transmitter 5, which may comprise a single diode or an array of diodes, a laser diode receiver 6, which can also comprise one or more diodes, and optics 7 (not shown in detail), to collimate and direct the photonic energy to/from the transmitter/receiver. As stated, the optics is not described in detail, for the sake of brevity, since it may be of any suitable shape which is understood by the skilled person. The optics can further comprise mirrors and/or other optical parts for receiving and transmitting, as needed.

The unit according to this embodiment of the invention operates as follows: when the pole is to transmit, the central processing unit (CPU) 8 codifies the information and transforms it into a series of electrical pulses, through a pulse shaping unit 9, which are transformed from voltage pulses into current pulses by driver 10, and which eventually are fed to the transmitter laser diode 5, and transmitted through the optics 7.

In the receiving mode, the energy received by receiver diode 6 is transformed into an electrical signal, which is amplified by the amplifier 11 which generates a signal with two logic levels, namely "1" or "0". The CPU 8 receives the digital signal and decodes it.

The information is transmitted, according to one embodiment of the invention, in the form of a fixed frame. After reception of the signal and decodification thereof in the CPU, the information is codified again, after the appropriate information has been added, which is relevant to the pole in question. The information block transmitted between poles may have, for instance, the form shown in Fig. 3. In this example, one part of the transmission is taken by synchronization signals, generated by the synchronizer 12 of Fig. 2, and which are used to synchronize different poles, which is followed by the code of the specific pole which generates it, which in turn is followed by the data encloding the message being sent (for instance, a non-authorized entrance and its location, functioning condition of the system, etc.), and the message is concluded by an end of message (EOM) signal. In this way, each pole or station can change the data, according to the particular situation prevailing at the pole at any given time.

As will be apparent to the skilled person, communication between poles can be effected in either or both directions, and providing appropriate elements for doing so is within the skill of the routineer and, therefore, is not discussed herein in detail, for the sake of brevity. Of course, this permits to operate the fence and to communicate to the base station a disturbance, also in the event that a pole may become inoperative by either the action of an intruder, or because of a malfunctioning. The location of such an event is also immediately identified, thanks to the identification of the single poles afforded by the invention.

According to one particular embodiment of the invention, it is possible to permit authorized crossing of the fence without activating an alarm. This is convenient because it is often more convenient to reach a predetermined location within the secured perimeter from the outside rather than passing through a gate which may be far away from it. According to this preferred embodiment of the invention this is achieved by providing the authorized person with identification means which are recognizable by the poles of the fence. These means comprise a signal generator which identifies the bearer as an authorized person. The signal generated is transmitted to the pole which either zeroes the "disturbed" signal, or attaches to it an additional signal indicating that the disturbance has been created by an authorized person. Thus, the central station which receives the signal does not cause an alarm signal to be generated.

As will be appreciated by the skilled person, there are different ways to control the transmission between two neighbouring poles. For instance, transmission may be effected in a continuous mode. In this mode, when the laser beam is not received at the receiving pole, the CPU of the pole will make a decision that an unauthorized entrance has occurred, when a threshold period of time has passed without receiving the beam. The same will happen if the beam is transmitted in a high pulse rate mode. In the pulse mode, the receiving pole will know when the next pulse is expected, and will therefore decide that an entrance has been made only after the expected pulse has not been received. It is also possible, in order to prevent the transmission of false pulses by an unauthorized person, to randomize the rate of the pulses, so that it changes constantly. When this is effected, each transmission will contain also information of when the next pulse is expected. In this way, it will not be possible to falsify the transmission, given the short time between pulses and the high rate of random change.

If the received beam is one that is reflected by (rather than transmitted from) a neigbouring pole, it is also possible to determine the range from the pole where the entrance has been effected. This is particularly important when the distance between poles is considerable. Thus, the position of the person effecting the unauthorized entrance can be determined with a high degree of accuracy.

In Fig. 2 the decoding and identification unit (DIU) 13 receives the signal which identifies the authorized person, checks it and if the person is indeed authorized, permits its passage by not generating an alarm signal. The person can be notified of the permission given to pass, in a variety of ways, e.g., by an acoustic or optical signal. Of course, the DIU does not necessarily have to be positioned on each pole. The signal which identifies the person wishing to enter the perimeter may be transmitted to a central unit located elsewhere (for instance, at the base station), as a part of the data which is continuously transmitted between the poles, and the permission-to-enter signal can be transmitter from the DIU in the same way, until it reaches the appropriate pole where the signal is given.

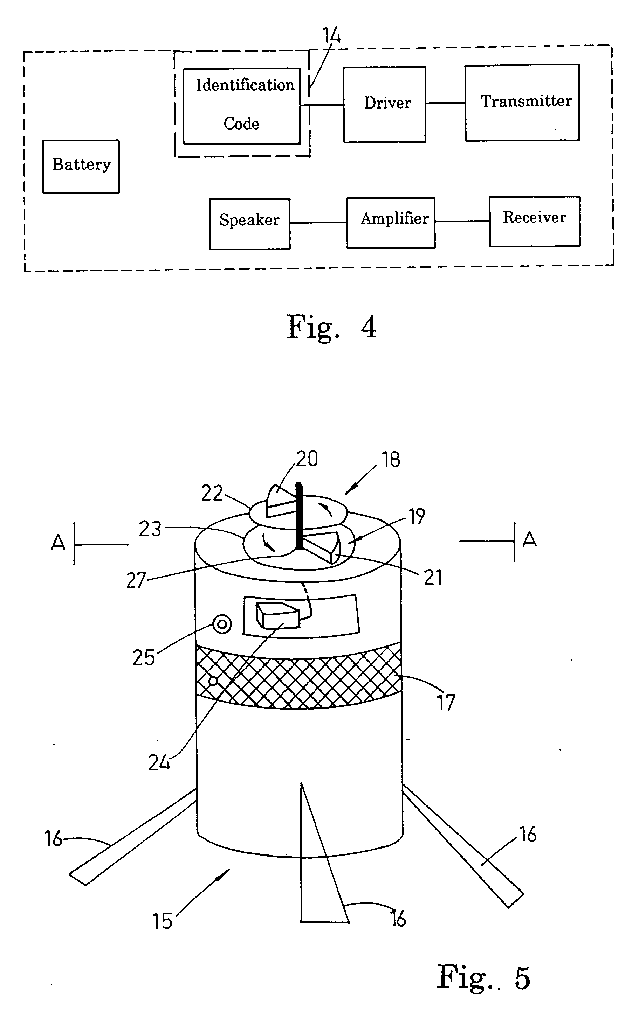

The portable signal generator may transmit the signal to the pole by a variety of means, e.g., through an input jack physically located on the pole, or by radio transmission, such as by using an acoustic signal, or RF tag as a signal generator, or even by utilizing the receiving laser diode as a receiver and a modulated laser diode transmission as the signal generator. As shown in Fig. 4, which illustrates a portable unit according to one embodiment of the invention, the unit comprises conventional components, such as power (battery), a driver and a transmitter. The identification code is provided by the Identification Code Unit (ICU) 14, which may be a plug-in unit, so that the identification code can be changed periodically, or according to the person usign the unit. A receiver is also provided when it is desired to receive messages from the pole. Messages so received are typically amplified and transmitted through a speaker, as shown in the figure, or printed on a screen (e.g., a liquid crystal display). These messages may be simply an "authorized to pass" message, but may also contain other messages which the base unit wishes to transmit to the specific person who has identified himself.

Fig. 5 illustrates the elements of a pole, according to a particular embodiment of the invention. While reference is made to "poles", it is understood that there are no limitations to the shape of the unit, other than those dictated by functional considerations, and they need not be necessarily poles. The pole shown in Fig. 5 has a main body 15, provided with legs 16 which are provided in order to stabilize the pole to the ground. A reflecting material 17 can also be provided, for the purpose of bi-directional communication. A transmitting system 18 and a receiving system 19 are provided, which comprise appropriate diodes and optics (20 and 21 respectively), mounted on rotating plates (22 and 23 respectively). The rotating plates are used to position the optics in the appropriate positioned relationship with respect to the neigbouring poles. This includes angle relative to the pole vertical axis, as well as inclination relative to the ground, when neighbouring poles are not positioned at the same absolute height. The CPU and other units are located in box 24, which is normally not seen from the outside, part of the main body 15 haveing been removed in the figure for the sake of illustration. A socket 25 can also be provided, to permit physical connection with the portable recognition unit, as discussed above.

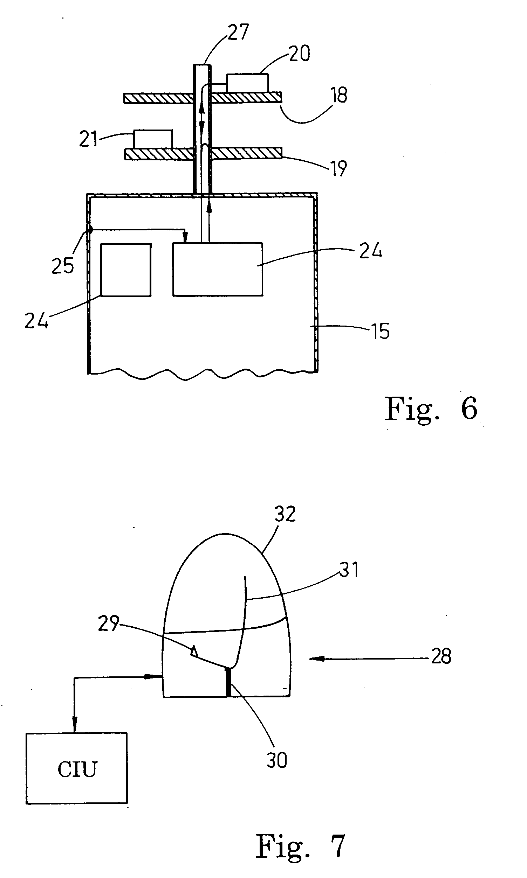

Fig. 6 shown the elements of the pole of Fig. 5, in cross-section, and is self-explaining. Additionally, a power supply unit 26 is also seen in the figure. As can further be seen, all the wirings can be passed through the central shaft, 27.

The base station (4 in Fig. 1) comprises all logic and additional functions to be performed by the fence. For instance, the base station 4 receives the signals generated by the various poles along the fence and identifies the location of disturbances, decides whether any signal received requires the activation of an alarm, records disturbances in memory means, communicates with outside means, e.g., a central computer, as required, etc.

The invention can be conveniently exploited also to secure small perimeters, as shown for instance in Fig. 7. The modified pole 28 of Fig. 7 can be positioned, e.g., on the roof of a sentry position or of a car, and is suitable to secure the perimeter surrounding it, and to alert the persons within it of any movement within such small perimeter. The pole 28 comprises an emitting/receiving laser diode 29, positioned or a rotating motor 30, which also rotates a mirror 31, which elements are contained in a transparent casing 32. A control and identification unit (CIU) receives the signals received by the laser diode and processes them to determine whether an intrusion is taking place. The motor 30 rotates the assembly including laser diode 29 and mirror 31 by 360°, so that the surroundings of the assembly are entirely covered by the laser transmission, and the laser light reflected thereby reaches the assembly as it rotates. The CIU contains logic means and memory means, and stores the image of the surroundings as created by the reflected laser light at each rotation of the assembly. Comparison of two consecutive pictures determines whether any changes have taken place in the picture. if a substantial change has taken place, then an alarm signal is generated so that the operator may physically check it. of course, it is also possible to provide a clear indication of the direction of the disturbance, thus permitting a quicker check thereof by the operator.

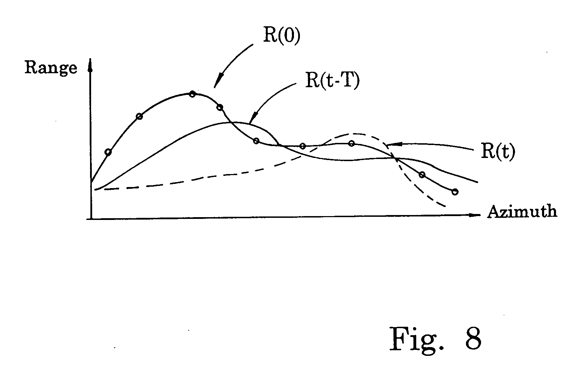

The decision of whether a disturbance is to be taken into account or not, so as to generate an alarm signal, is made by the system by comparing pictures. This is schematically illustrated in Fig. 8. The unit which rotates receives light reflected by objects located at differenct distances and angles (azimuth) from it. The result is a shown in the graph of Fig. 8, which shows three range versus azimuth lines, taken at different times. A comparison of the values taken at time t-T (indicated as R(t-T)) with that of the values taken at time t (R(t)), will provide the differences at any given azimuth. This process is carried out continuously, the initial (reference) graph being R(0). The CPU of the personal unit will decide that a disturbance needs to generate an alarm signal, when the magnitude of the difference (change of distance) at a given azimuth exceeds a predetermined threshold. Rate of change can also be taken into account in determining whether a change is to b classified as an "alarm". One possible algorithm for this purpose is illustrated below:

We identify the range measured at a given time in a given direction, as $R(t,\theta)$. The system measures:

$$\varepsilon_0 = R(t,\theta) - R(0,\theta)$$
$$\varepsilon_\tau = R(t,\theta) - R(T,\theta)$$

wherein $\varepsilon_0$ is the error between the present picture and that taken at t=0. Furthermore, $\varepsilon_\tau$ is the error between the present picture and that taken T seconds ago. The decision to generate an alarm is made according to the following rules:

if $\varepsilon_0$ or $\varepsilon_\tau$ > threshold.: alarm
if $\varepsilon_0$ < threshold and $\varepsilon_\tau$ > threshold.: alarm
if $\varepsilon_0$ and $\varepsilon_\tau$ < threshold.: no alarm
if $\varepsilon_\tau$ < threshold and $\varepsilon_0$ > threshold.: no alarm

Here, again, it is possible to provide means to identify an authorized entry into the secured perimeter, as earlier described with reference to Fig. 4.

All the above description of preferred embodiment has been given only for the purpose of illustration and is not intended to limit the invention in any way. Many modifications can be effected in the various elements, picture processing means and methods, transmission systems and devices, all without exceeding the scope of the invention as defined and claimed in the following claims.

## Claims

1. A perimeter securing apparatus comprising
   a. one or more unit, each unit comprising:
   - laser light generating means;
   - laser light receiving means; and
   b. signal receiving and analyzing means, to receive the signal generated by the said laser light receiving means and to determine any deviation of the said signal from a predetermined value.

2. An apparatus according to claim 1, comprising
   a. one or more unit, each unit comprising:
   - laser light generating means;
   - laser light receiving means;
   b. signal encoding means capable of encoding a signal on the said transmitted laser light; and
   c. signal receiving and analyzing means, to receive the signal generated by the said laser light receiving means and to determine any deviation of the said signal from a predetermined value.

3. A laser fence according to claim 1, comprising a plurality of poles, each pole being provided with at least one receiving/transmitting laser diode, each pole being provided with signal modulating means to modulate the laser light transmitted thereby to encode a predetermined message.

4. A laser fence according to claim 3, wherein the predetermined message is a code identifying the transmitting pole.

5. A laser fence according to claim 3 or 4, wherein each pole also comprises signal receiving means to receive a signal from an outside source.

6. A laser fence according to any one of the preceding claims, comprising in combination:
   - a plurality of poles, each pole being provided with at least one receiving/transmitting laser diode, each pole being provided with signal modulating means to modulate the laser light transmitted thereby to encode a predetermined message;
   - a base station to receive the laser light encoding the signal(s) transmitted from one pole to the neighboring one.

7. A fence according to claim 6, wherein the signal is transmitted by laser light, from each pole to the neighboring one, in one direction, until it reaches the base station.

8. A fence according to claim 6, wherein the signal is transmitted by laser light, from each pole to the two neighboring ones, in two directions, until it reaches the base station.

9. A fence according to any one of the preceding claims, wherein the signal encoded by the laser light transmitted by each pole to the neighboring one(s) includes one or more of the following data:
   - pole identification code;
   - "normal" or "disturbed" identification code;
   - authorized entrance identification.

10. A fence according to claim 9, wherein the signal transmitted by each consecutive pole is the sum of all signals generated by preceding poles and of the signals generated by the transmitting pole.

11. A fence according to the preceding claims, wherein the signal is transmitted continuously.

12. A fence according to any one of claims 1 to 10, wherein the signal is transmitted by high-rate pulse transmission.

13. A fence according to claim 12, wherein the rate of pulse transmission varies with time.

14. A fence according to any one of the preceding claims, further comprising means to transmit messages to a person interfacing with it by means of a portable identification unit.

15. A personal perimeter securing apparatus according to claim 1, comprising a transparent housing containing an assembly mounted on a rotating motor, the said assembly comprising at least one receiving/transmitting laser diode, and a control and identification unit to receive the signals generated by the reflected laser light received by the receiving diode and to compare the picture generated thereby with the picture generated by the previous rotation of the assembly, and to generate an alarm signal if the two compared pictures differ by a predetermined amount.

16. An apparatus according to claim 15, which is mounted on the roof of a vehicle.

17. An apparatus according to claim 15, which is mounted on the roof of a building.

Fig. 1

Fig. 2

Fig. 3

Fig. 4

Fig. 5

Fig. 6

Fig. 7

CIU

Fig. 8

**European Patent Office**

## EUROPEAN SEARCH REPORT

Application Number

EP 95 30 1407

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-5 198 799 (D. PASCALE)<br>* the whole document *<br>--- | 1-14 | G08B13/183<br>G01S17/02 |
| X | EP-A-0 532 976 (DEUTSCHE AEROSPACE)<br>* the whole document *<br>----- | 1,15-17 | |
| | | | **TECHNICAL FIELDS SEARCHED** (Int.Cl.6)<br><br>G08B<br>G01S |

The present search report has been drawn up for all claims

| Place of search | Date of completion of the search | Examiner |
|---|---|---|
| THE HAGUE | 3 July 1995 | Sgura, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)